# FASCICULE DE BREVET EUROPEEN

(11) **EP 1 175 741 B1**
(45) Date de publication et mention de la délivrance du brevet: **05.11.2003**
(21) Numéro de dépôt: 00925424.4
(22) Date de dépôt: 10.05.2000
(51) Int. Cl.: H04B 7/185

(54) **TERMINAL DE COMMUNICATION BIDIRECTIONNEL MULTIMEDIA**
BIDIREKTIONALES MULTIMEDIAKOMMUNIKATIONSENDGERÄT
MULTIMEDIA TWO-WAY COMMUNICATION TERMINAL

(30) Priorité: 10.05.1999 FR 9905921
(43) Date de publication de la demande: 30.01.2002
(73) Titulaire: CENTRE NATIONAL D'ETUDES SPATIALES, F-75039 Paris Cedex 01 (FR)
(72) Inventeur: GLEYZES, Yves-Paul, F-31500 Toulouse (FR); SIRMAIN, Christian, F-31320 Vieille-Toulouse (FR)
(74) Mandataire: Colas, Jean-Pierre
(86) Numéro de dépôt international: FR0001256
(87) Numéro de publication internationale: WO00069093

(56) Documents cités:
- EP-A- 0 720 308
- EP-A- 0 749 217
- WO-A-98/49745
- FR-A- 2 762 935
- US-A- 5 347 286

## Description

La présente invention est relative à un terminal de communications bidirectionnel multimédia.

La transmission d'informations multimédia, incluant à la fois des informations sonores ou vocales, des données numériques et des images, implique l'utilisation d'une bande de fréquences de grande largeur et donc de supports capables de transmettre de telles largeurs de bande. Parmi ces supports, on utilise aujourd'hui essentiellement les fibres optiques, les faisceaux hertziens et les satellites.

L'utilisation de fibres optiques est grevée de l'inconvénient que constitue la nécessité d'installer une infrastructure au sol dense. L'utilisation de faisceaux hertziens est grevée du même inconvénient, auquel s'ajoute celui relatif à la sensibilité de ce mode de transmission aux perturbations dues aux environnements radioélectrique et atmosphérique, qui peuvent dégrader la qualité des liaisons, voire provoquer des coupures de celles-ci.

On utilise aujourd'hui couramment des satellites géostationnaires pour la transmission, en bande C ou Ku, d'informations multimédia, en combinaison avec des terminaux du type VSAT, équipés d'antennes à forte ouverture radioélectrique et donc à faible diamètre géométrique. Il n'est bien sûr pas nécessaire d'équiper l'antenne d'un système de poursuite du satellite, géostationnaire, mais cet avantage est fortement atténué par les inconvénients que constituent 1) la nécessité d'équiper le satellite d'émetteurs de puissance très élevée pour compenser l'atténuation des signaux dans l'espace (le satellite est écarté du sol de 36 000 Km environ) et 2) un temps de réponse de plus de 2 secondes pour une information faisant un aller-retour entre la Terre et le satellite.

L'utilisation de satellites défilant en orbite basse (de 350 à 20 000 Km par exemple) permet de supprimer ou d'atténuer ce dernier inconvénient par la réduction, jusqu'à 100 ms par exemple, de ce temps de réponse. Cependant, dans une application multimédia, il faut prévoir alors au sol des équipements de poursuite du satellite défilant pour maintenir une communication, celle-ci s'interrompant quand le satellite pointé quitte l'espace où il est "visible" du sol.

Une solution à ce problème consiste à utiliser non pas un satellite isolé, mais une constellation de satellites défilant en orbite basse. Avec une constellation comptant plusieurs centaines de satellites (comme dans le projet TELEDESIC), il est alors possible d'assurer continûment la couverture d'un site donné par les couvertures élémentaires des satellites de la constellation, ce qui évite tout recours à des moyens de suivi des satellites défilants. Une telle solution ne semble cependant pas viable d'un point de vue économique, compte tenu du coût de la fabrication, du lancement et de la maintenance d'une constellation comptant plusieurs centaines de satellites.

Le document FR-A-2 762 935, tout comme le document EP-A-0 720 308, décrivent p. ex. des moyens de commande à partir d'informations fournies par un système de positionnement du terminal dans un référentiel lié à la Terre.

La présente invention a précisément pour but de fournir un terminal de communication multimédia propre à constituer une interface de communication entre un système de communication multimédia par satellite et des appareils de réception et/ou d'émission d'informations multimédia qui ne présente pas les inconvénients des moyens connus à cet effet et qui, en particulier, permette d'assurer une telle communication à débit élevé, permanente et bidirectionnelle, avec un temps de réponse imperceptible par les utilisateurs, dans le cadre d'un système de communication économiquement viable.

La présente invention a aussi pour but de réaliser un tel terminal conçu pour être autonome, mobile et d'encombrement réduit, de manière à pouvoir être transporté et installé facilement sur tout site d'utilisation.

On atteint ces buts de l'invention, ainsi que d'autres qui apparaîtront à la lecture de la description qui va suivre, avec un terminal de communication bidirectionnel multimédia, remarquable en ce qu'il comprend a) au moins deux antennes orientables d'émission/réception de signaux radioélectriques porteurs d'informations multimédia, b) des moyens électroniques de traitement des signaux reçus ou à émettre par ces antennes, c) des moyens associés à chaque antenne pour pointer celle-ci sur un satellite prédéterminé d'une constellation de tels satellites défilants formant partie d'un système de télécommunication multimédia et d) des moyens de commutation sélective de la transmission d'informations multimédia entre le terminal et les satellites de ladite constellation, du satellite sur lequel est pointée l'une des antennes vers le satellite sur lequel est pointée l'autre antenne, de manière à garantir la continuité du flux d'informations transmis entre le terminal et la constellation.

Comme on le verra plus loin en détail, le terminal ainsi constitué permet d'établir un système de communication d'informations multimédia par satellite présentant les caractéristiques avantageuses énoncées ci-dessus.

Suivant d'autres caractéristiques du terminal selon l'invention, les moyens de pointage comprennent a) une unité d'orientation d'une antenne, associée à chacune de celles-ci, b) des moyens de commande de ces unités à partir d'informations fournies par b₁) un système de positionnement du terminal dans un référentiel lié à la Terre et b₂) des éphémérides des satellites en visibilité de ladite constellation, délivrées par un centre de mission de cette constellation. Avantageusement, ce système de positionnement est la constellation GPS délivrant des données de positionnement du terminal et de temps auxdits moyens de commande. De même, le référentiel lié à la Terre est avantageusement défini par un satellite géostationnaire.

D'autres caractéristiques et avantages de la présente invention apparaîtront à la lecture de la description qui va suivre et à l'examen du dessin annexé dans lequel :
- la figure 1 est une représentation schématique du terminal suivant l'invention et de ses liaisons avec des appareils périphériques, et
- la figure 2 est un diagramme fonctionnel de moyens électroniques de traitement de signaux incorporés au terminal de la figure 1.

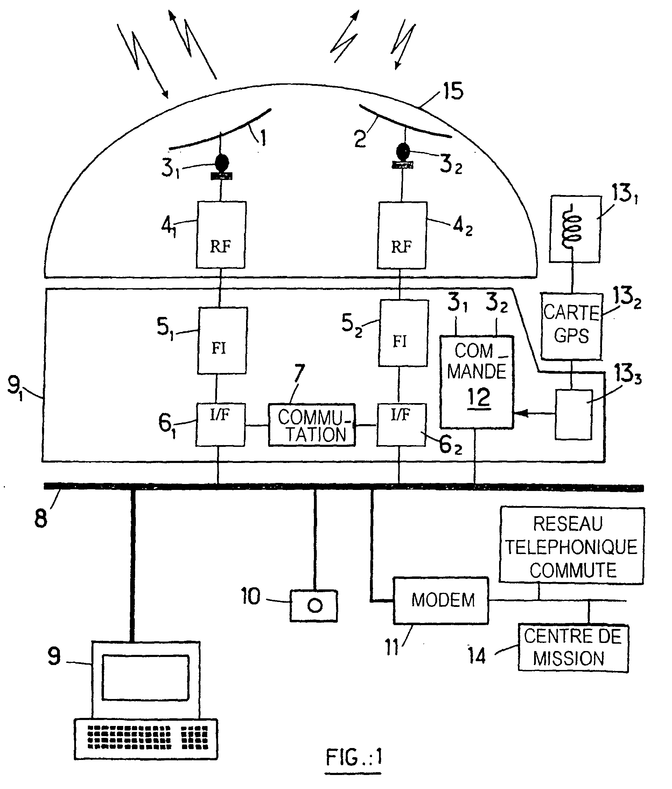

On se réfère à la figure 1 du dessin annexé où il apparaît que le terminal suivant l'invention comprend deux antennes 1,2 orientables conçues pour recevoir ou émettre sélectivement des signaux échangés avec des satellites défilants (non représentés) d'une constellation de tels satellites formant partie d'un système de télécommunication d'informations multimédia.

Chaque antenne 1,2 est montée sur une unité d'orientation 3₁,3₂ respectivement, formant partie de moyens de pointage sur un satellite préselectionné de la constellation de satellites, ceux-ci défilant préférablement en orbite basse pour les raisons explicitées ci-dessus et tenant à rendre imperceptibles le temps de réponse qui affecte les communications entre le terminal et le satellite.

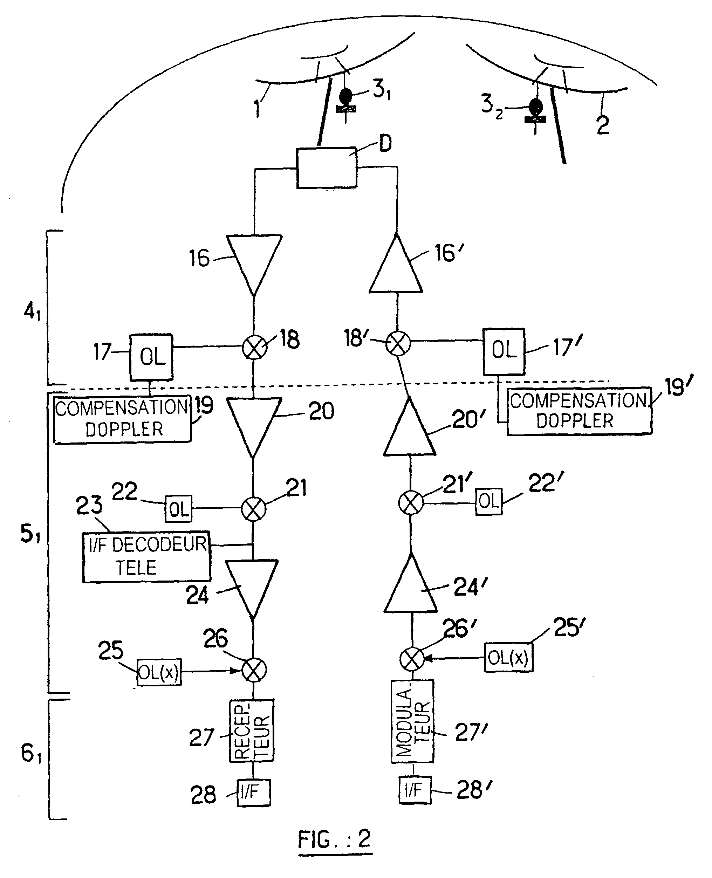

Chaque antenne 1,2 est aussi connectée à des moyens électroniques (4₁,5₁,6₁) et (4₂,5₂,6₂) respectivement, de traitement des signaux reçus ou à émettre. Ces moyens seront décrits en plus de détail dans la suite, en liaison avec la figure 2.

Le terminal comprend encore des moyens 7 de commutation sélective de la transmission d'informations multimédia reçues ou émises, soit par l'antenne 1, soit par l'antenne 2, à travers un bus de communication sur lequel sont connectés des appareils périphériques d'exploitation ou de génération de ces informations. A titre d'exemple illustratif et non limitatif seulement, ces appareils peuvent comprendre un ordinateur personnel ou d'entreprise 9, une caméra 10 pour vidéoconférence, un modem 11 relié, par exemple, au réseau téléphonique commuté, au centre de mission 14 de la constellation, etc....

Les unités d'orientation 3₁,3₂ des antennes sont commandées par des moyens 12 alimentés par des informations venues d'un système (13₁,13₂,13₃) de positionnement du terminal dans un référentiel lié à la Terre, et par des informations venues, à travers le modem 11, du centre de mission 14 de la constellation de satellites, à savoir notamment les éphémérides permettant de connaître à chaque instant les paramètres orbitaux de chacun des satellites de la constellation.

Le système de positionnement peut être celui bien connu sous le sigle "GPS". Le terminal comprend alors une antenne 13₁ pour recevoir les signaux émis par les satellites de la constellation GPS, à savoir des signaux permettant de localiser le terminal et des signaux temporels, la localisation du terminal étant, par exemple, réalisée dans un référentiel défini par des signaux émis par un satellite géostationnaire, et donc ainsi lié à la Terre. Les signaux sont traités sur une carte électronique 13₂ et transmis à une interface de communications 13₃ avec les moyens de commande 12.

Suivant une caractéristique de la présente invention, ces moyens 12 connaissant à la fois la position du terminal et les positions des satellites de la constellation GPS, peuvent calculer et commander l'orientation des antennes 1 et 2 de manière que celles-ci suivent chacune un des satellites de la constellation présents dans l'espace couvert par ces antennes, ces satellites étant choisis pour qu'au moins l'un d'entre eux soit "visible" à tout moment par l'une des antennes 1 et 2. Ainsi, quand les moyens de commande 12 détectent que l'un des satellites suivis quitte l'espace "visible" alors que la transmission bidirectionnelle d'informations entre le bus 8 et la constellation se faisait par ce satellite, les moyens de commutation 7 reçoivent des moyens 12 un ordre de basculement de la transmission d'informations à travers l'autre antenne, et donc l'autre satellite qui, lui, reste alors visible par cette antenne du terminal. On assure ainsi la continuité de la transmission de flux d'informations entre le terminal et la constellation, suivant une caractéristique importante de la présente invention.

Pratiquement, le terminal suivant l'invention peut prendre la forme d'un ensemble modulaire, autonome et mobile comportant, sous un radôme 15 de protection des antennes 1 et 2, les unités d'orientation 3₁ et 3₂ respectivement de ces antennes et une partie 4₁,4₂ des moyens électroniques associés à ces antennes, que l'on décrira en plus de détails dans la suite.

Une carte électronique 9₁, montée dans le microordinateur 9, comporte l'essentiel (5₁,6₁;5₂,6₂) de ces moyens électroniques, ainsi que les moyens de commutation 7, les moyens de commande 12 et l'interface 13₃ avec la carte GPS 13₂.

Les antennes sont avantageusement du type VSAT, à grande ouverture radioélectrique et donc faible ouverture géométrique. Dans le domaine des bandes d'hyperfréquences V, Ka et Ku, le diamètre géométrique de ces antennes peut alors être suffisamment faible pour que l'ensemble modulaire qui les contient présente un encombrement faible, de l'ordre de 1,50 m dans sa plus grande dimension, et un poids réduit, d'une dizaine de kilos. Cet ensemble peut alors être installé aisément sur une construction fixe (immeuble) ou mobile (véhicule).

On se réfère maintenant à la figure 2 du dessin annexé pour décrire en plus de détails les moyens électroniques incorporés au terminal suivant la présente invention, pour conformer convenablement les signaux qui assurent une transmission bidirectionnelle d'informations multimédia entre la constellation de satellites et les appareils périphériques connectables à ce terminal.

A la figure 2, on a représenté seulement les chaînes de moyens électroniques associés à l'antenne 1, les chaînes associées à l'antenne 2 étant identiques.

Comme représenté, ces moyens comprennent deux chaînes, l'une assurant la transmission d'informations multimédia de la constellation vers le terminal et l'autre assurant une transmission en sens inverse de telles informations.

Un duplexeur D isole la chaîne d'émission de la chaîne de réception, ou inversement. Pour une transmission d'informations venues de la constellation sous la forme d'une modulation d'une fréquence RF choisie dans la bande Ka (20-30 GHz) ou V (35-40 GHz) compatible avec le débit élevé qu'exige l'information multimédia, le signal reçu par l'antenne passe d'abord dans un amplificateur hyperfréquence 16 dont la sortie est appliquée à un abaisseur de fréquence constitué par un oscillateur local 17 et un mélangeur 18 afin de translater l'information à recevoir dans une fréquence intermédiaire FI plus basse, en bande Ku (12-14 GHz) par exemple. Cet oscillateur local 17 peut lui-même être associé à des moyens 19 de compensation de l'effet Doppler dû au défilement des satellites pointés, si nécessaire.

Pour réception d'informations de la constellation directement en bande Ku, le premier étage d'amplification et de changement de fréquence doit évidemment être supprimé.

La sortie du mélangeur 18 alimente un amplificateur 20 en bande Ku dont la sortie est translatée en fréquence en bande L par l'intermédiaire d'un autre mélangeur 21 associé à un deuxième oscillateur local 22. La sortie du mélangeur 21 est propre à alimenter une interface 23 associée à un décodeur d'émissions de télévision diffusées par satellite, suivant l'une des applications possibles du terminal selon l'invention.

Pour recevoir des informations multimédia exploitables par l'ordinateur 9, il convient de réduire encore la fréquence porteuse. Pour ce faire, le signal en bande L, amplifié en 24 est encore translaté en fréquence par l'intermédiaire d'un mélangeur 26 et d'un oscillateur local 25, le signal résultant passant dans un récepteur/démodulateur 27 pour être délivré, à une fréquence "vidéo" à une interface (28) de communication avec l'ordinateur 9 par exemple, à travers le bus 8, pour établir avec ce dernier une communication selon un protocole prédéterminé, tel que le protocole TCP/IP ou le protocole FTP par exemple.

Il apparaît ainsi que les moyens électroniques de traitement de signaux du terminal selon l'invention comprennent une cascade de générateurs de fréquence (les oscillateurs locaux) et des moyens de mélange des fréquences émises par ces générateurs en fonction des signaux reçus, ces générateurs et ces moyens permettant de ramener la fréquence du signal, de la bande Ku, Ka ou V à la bande L (pour un décodeur TV), ou à une bande "vidéo" pour la communication avec l'ordinateur 9 par exemple.

En sens inverse, pour transmettre des signaux porteurs d'informations multimédia à un satellite de la constellation, par l'intermédiaire des antennes 1 et 2, le terminal suivant l'invention comprend une chaîne électronique 16' à 28' composée d'éléments correspondant aux éléments 16 à 28 respectivement, de la chaîne décrite ci-dessus, mais travaillant en sens inverse pour présenter les signaux appliqués à l'antenne sur une porteuse en bande Ku, Ka ou V, par exemple, convenant à leur propagation dans la constellation de satellites.

C'est ainsi que la chaîne 16' à 28' comprend une interface vidéo 28', un modulateur 27' modulant une porteuse dont la fréquence est élevée jusqu'à la fréquence à émettre en bande Ku, Ka ou V par l'intermédiaire d'élévateurs de fréquence (constitués chacun par un mélangeur associé à un oscillateur local) tels que (25',26'), (22',21') et (17',18'), et d'amplificateurs 24',20' et 16'. La sortie de l'amplificateur 16' alimente l'antenne 1 via le duplexeur D.

Il apparaît maintenant que l'invention permet bien d'atteindre les buts annoncés, à savoir fournir un terminal de communications bidirectionnel multimédia, donc à débit élevé d'informations, suivant des communications bidirectionnelles à faible temps de réponse (inférieur à 100 ms par exemple) grâce à l'utilisation de satellites défilant en orbite basse (de 300 à 20 000 km par exemple) et permettant, de manière économique, l'utilisation d'une constellation à faible nombre de satellites grâce aux moyens de pointage de ceux-ci prévus dans le terminal, qui permettent de suivre chaque satellite dans tout l'espace visible depuis le terminal.

De tels terminaux, associés directement à une telle constellation de satellites, permettent d'assurer des transmissions d'informations à haut débit qui ne souffrent pas des engorgements que l'on remarque actuellement quand ces informations sont transmises, au moins en partie, par des réseaux de transmission terrestres.

L'ensemble modulaire protégé par le radôme 15 est susceptible d'être réalisé sous des formes et des prix adaptés au grand public ou aux utilisateurs professionnels. Pour ces derniers, l'ensemble peut comporter un nombre d'antennes supérieur à deux, pour fiabiliser les transmissions de signaux porteurs d'informations multimédia.

Bien entendu, l'invention n'est pas limitée au mode de réalisation décrit et représenté qui n'a été donné qu'à titre d'exemple. C'est ainsi que les moyens électroniques du terminal suivant l'invention pourraient être dotés de moyens de réglage permettant d'adapter un même terminal de base à des fonctionnements dans des bandes de fréquence spécifiques différentes. C'est ainsi encore que le terminal suivant l'invention n'est pas limité à une utilisation en combinaison avec une constellation de satellites défilants. Ce même terminal pourrait aussi, bien sûr, échanger des informations avec un satellite géostationnaire, l'antenne utilisée pouvant alors rester fixe.

## Revendications

1. Terminal de communication bidirectionnel multimédia, comprenant a) au moins deux antennes (1,2) orientables d'émission/réception de signaux radioélectriques porteurs d'informations multimédia, b) des moyens électroniques (4₁,5₁,6₁; 4₂,5₂,6₂) de traitement des signaux reçus ou à émettre par ces antennes (1,2), c) des moyens (12;3₁,3₂) associés à chaque antenne (1,2) pour pointer celle-ci sur un satellite prédéterminé d'une constellation de tels satellites défilants formant partie d'un système de télécommunication multimédia et d) des moyens (7) de commutation sélective de la transmission d'informations multimédia entre le terminal et les satellites de ladite constellation, du satellite sur lequel est pointé l'une des antennes (1,2) vers le satellite sur lequel est pointé l'autre antenne, de manière à garantir la continuité du flux d'informations transmis entre le terminal et la constellation, lesdits moyens de pointage comprenant a) une unité (3₁,3₂) d'orientation d'une antenne, associée à chacune de celles-ci, b) des moyens (12) de commande de ces unités à partir d'informations de positionnement du terminal dans un référentiel lié à la Terre et des éphémérides des satellites en visibilité de ladite constellation, délivrés par un centre de mission (14) de cette constellation, ledit terminal étant **caractérisé en ce qu'**il comprend en outre un système (13₁, 13₂, 13₃) délivrant lesdites informations de positionnement dudit terminal.

2. Terminal conforme à la revendication 1, **caractérisé en ce que** ledit système de positionnement (13₁, 13₂, 13₃) est connecté à la constellation GPS pour délivrer des données de positionnement du terminal et de temps auxdits moyens de commande.

3. Terminal conforme à la revendication 1 ou 2, **caractérisé en ce que** le référentiel lié à la Terre est défini par un satellite géostationnaire.

4. Terminal conforme à l'une quelconque des revendications 1 à 3, **caractérisé en ce qu'**il comprend des moyens de liaison et d'interface avec un ordinateur (9) personnel ou d'entreprise et avec au moins une unité du groupe formé par : une caméra vidéo (10), un modem 11.

5. Terminal conforme à l'une quelconque des revendications 1 à 4, **caractérisé en ce que** lesdits moyens électroniques de traitement de signaux comprennent, pour la réception des signaux émis par un satellite de la constellation, une cascade d'abaisseurs de fréquence (17,18 ; 21,22 ; 25,26) et une pluralité d'amplificateurs de fréquence (16,20,24) associés chacun à un desdits abaisseurs de fréquence, et des moyens de démodulation (27) et de communication (28) des signaux ainsi transmis.

6. Terminal conforme à l'une quelconque des revendications 1 à 4, **caractérisé en ce que** lesdits moyens électroniques de traitement de signaux comprennent, pour l'émission de signaux vers un satellite de la constellation, une cascade d'élévateurs de fréquence (17',18' ; 21',22' ; 25',26'), et une pluralité d'amplificateurs de fréquence (16',20',24') associés chacun à un desdits élévateurs de fréquence, et des moyens de modulation (27') et de communication (28') des signaux à émettre.

7. Terminal conforme à l'une quelconque des revendications 5 et 6, **caractérisé en ce qu'**il comprend des moyens (19,19') de compensation de l'effet Doppler sur les signaux émis ou reçus.

8. Terminal conforme à l'une quelconque des revendications 1 à 7, **caractérisé en ce que** les antennes (1,2) sont protégées par un radôme (15) commun, l'ensemble constitué par ledit radôme (15), lesdites antennes (1,2), leurs unités d'orientation (3₁,3₂) et une partie (4₁,4₂) des moyens électroniques de traitement de signaux constituant un ensemble autonome et mobile.

9. Terminal conforme à l'une quelconque des revendications précédentes, **caractérisé en ce que** lesdits moyens électroniques de traitement de signaux comprennent des moyens d'adaptation à des bandes de fréquence spécifiques.

## Patentansprüche

1. Bidirektionales Multimedia-Kommunikationsendgerät mit
a)mindestens zwei ausrichtbaren Antennen (1,2) zum Senden/Empfangen von radioelektrischen Signalen, die Multimedia-Informationen enthalten,
b) elektronischen Signalverarbeitungseinrichtungen (4₁, 5₁, 6₁; 4₂, 5₂, 6₂) zur Verarbeitung von über die Antennen (1, 2) empfangenen oder zu sendenden Signalen,
c) Einrichtungen (12; 3₁, 3₂), die mit jeder Antenne (1,2) verbunden sind, um diese auf einen vorbestimmten Satelliten aus einer Konstellation derartiger Umlaufsatelliten zu richten, die Teil eines Multimedia-Telekommunikationssystems sind, und
d) Einrichtungen (7) zum selektiven Umschalten der Multimedia-Informationsübertragung zwischen dem Endgerät und den Satelliten der vorgenannten Konstellation von dem Satelliten, auf den die eine der Antennen (1, 2) gerichtet ist, zu dem Satelliten, auf den die andere Antenne gerichtet ist, derart dass die Kontinuität des zwischen dem Endgerät und der Konstellation übertragenen Informationsflusses gewahrt bleibt,
wobei die Ausrichteinrichtungen aufweisen: a) eine Antennenausrichteinheit (3₁, 3₂), die mit jeder der Antennen verbunden ist, b) Einrichtungen (12) zum Steuern dieser Einheiten ausgehend von Informationen über die Position des Endgeräts in einem auf die Erde bezogenen Bezugssystem und über die Ephemeriden der Sichtbarkeit der Satelliten der Konstellation, welche von einem Missionszentrum (14) dieser Konstellation geliefert werden, wobei das Endgerät **dadurch gekennzeichnet ist, dass** es ferner ein System (13₁, 13₂, 13₃) aufweist, das die genannten Informationen über die Position des Endgeräts liefert.

2. Endgerät nach Anspruch 1, **dadurch gekennzeichnet, dass** das Positionssystem (13₁, 13₂, 13₃) mit der GPS-Konstellation verbunden ist, um Daten über die Position des Endgeräts und Zeitdaten an die genannten Steuereinrichtungen zu liefern.

3. Endgerät nach Anspruch 1 oder 2, **dadurch gekennzeichnet, dass** das auf die Erde bezogene Bezugssystem durch einen geostationären Satelliten definiert ist.

4. Endgerät nach einem der Ansprüche 1 bis 3, **dadurch gekennzeichnet, dass** es Verbindungs- und Interfaceeinrichtungen zu einem Personal Computer oder einem Unternehmensrechner (9) und zu mindestens einer Einheit aus der Gruppe gebildet durch: eine Videokamera (10), ein Modem (11), aufweist.

5. Endgerät nach einem der Ansprüche 1 bis 4, **dadurch gekennzeichnet, dass** die genannten elektronischen Signalverarbeitungseinrichtungen zum Empfangen der von einem Satelliten der Konstellation gesendeten Signale eine Kaskade von Frequenz-Abwärtstransformatoren (17, 18; 21, 22; 25, 26) und mehrere Frequenzverstärker (16, 20, 24), die jeweils mit einem der genannten Frequenz-Abwärtstransformatoren verbunden sind, und Einrichtungen zum Demodulieren (27) und zum Übertragen (28) der derart übertragenen Signale aufweisen.

6. Endgerät nach einem der Ansprüche 1 bis 4, **dadurch gekennzeichnet, dass** die genannten elektronischen Signalverarbeitungseinrichtungen zum Senden der Signale an einen Satelliten der Konstellation eine Kaskade von Frequenz-Aufwärtstransformatoren (17', 18'; 21', 22'; 25', 26') und mehrere Frequenzverstärker (16', 20', 24'), die jeweils mit einem der Frequenz-Aufwärtstransformatoren verbunden sind, und Einrichtungen zum Modulieren (27') und zum Übertragen (28') der zu sendenden Signale aufweisen.

7. Endgerät nach einem der Ansprüche 5 bis 6, **dadurch gekennzeichnet, dass** es Einrichtungen (19, 19') zum Kompensieren des Doppler-Effekts in den gesendeten oder empfangenen Signale aufweist.

8. Endgerät nach einem der Ansprüche 1 bis 7, **dadurch gekennzeichnet, dass** die Antennen (1, 2) durch eine gemeinsame Antennenkuppel (15) geschützt sind, wobei die Gesamtheit aus Antennenkuppel (15), den Antennen (1, 2), ihren Ausrichteinheiten (3₁, 3₂) und einem Teil (4₁,4₂) der elektronischen Signalverarbeitungseinrichtungen eine autonome und mobile Einheit bildet.

9. Endgerät nach einem der vorhergehenden Ansprüche, **dadurch gekennzeichnet, dass** die elektronischen Signalverarbeitungseinrichtungen Einrichtungen zur Anpassung an spezifische Frequenzbänder aufweisen.

## Claims

1. Bidirectional multimedia communication terminal including a) at least two orientable antennas (1, 2) for sending/receiving radio signals conveying multimedia data, b) electronic signal processor means (4₁, 5₁, 6₁ ; 4₂, 5₂, 6₂) for processing signals received or to be sent via said antennas (1, 2), c) pointing means (12 ; 3₁, 3₂) associated with each antenna (1, 2), for pointing it at a predetermined satellite from a constellation of non-geostationary satellites forming part of a multimedia telecommunication system, and d) switching means (7) for selectively switching the transmission of multimedia data between the terminal and the satellites of said constellation from the satellite at which one of said antennas (1, 2) is pointed to the satellite at which the other antenna is pointed, so as to guarantee continuous transmission of a data stream between said terminal and said constellation, said pointing means including a) an antenna orientation unit (3₁, 3₂) associated with each antenna, b) control means (12) for controlling said orientation units on the basis of data on the position of said terminal in a frame of reference tied to the Earth and on ephemerides of visible satellites of said constellation supplied by a mission center (14) of said constellation, which terminal being **characterized in that** it further includes a system (13₁, 13₂, 13₃) for delivering said data on the position of said terminal.

2. Terminal according to claim 1, **characterized in that** said positioning system (13₁, 13₂, 13₃) is connected to the GPS constellation to supply terminal position and time data to said control means.

3. Terminal according to claim 1 or 2, **characterized in that** said frame of reference tied to the Earth is defined by a geostationary satellite.

4. Terminal according to any of claims 1 to 3, **characterized in that** it includes connection and interface means with a personal or business computer (9) and with at least a unit from the group consisting of a video camera (10), a modem (11).

5. Terminal according to anyone of claims 1 to 4, **characterized in that** said electronic signal processor means include, for receiving signals sent by a satellite of said constellation, a cascade of frequency step-down devices (17, 18 ; 21, 22 ; 25, 26), a plurality of frequency amplifiers (16, 20, 24) each associated with one of said frequency step-down devices, and means for demodulating (27) and communicating (28) signals transmitted in this way.

6. Terminal according to anyone of claims 1 to 4, **characterized in that** said electronic signal processor means include, for sending signals to a satellite of said constellation, a cascade of frequency step-up devices (17', 18' ; 21', 22' ; 25', 26'), a plurality of frequency amplifiers (16', 20', 24') each associated with one of said frequency step-up devices, and means for modulating (27') and communicating (28') signals to be sent.

7. Terminal according to anyone of claims 5 and 6, **characterized in that** it includes means (19, 19') for compensating the Doppler effect on the signals sent or received.

8. Terminal according to anyone of claims 1 to 7, **characterized in that** said antennas (1, 2) are protected by a common radome (15) and the system consisting of said radome (15), said antennas (1, 2), their orientation units (3₁, 3₂) and part (4₁, 4₂) of said electronic signal processor means constitutes an autonomous and mobile system.

9. Terminal according to anyone of the previous claims, **characterized in that** said electronic signal processor means include means of adaptation to specific frequency bands.
